# EUROPEAN PATENT APPLICATION

(11) **EP 4 494 752 A1**
(43) Date of publication of application: **22.01.2025**
(21) Application number: 24161217.5
(22) Date of filing: 04.03.2024
(51) Int. Cl.: B01F 23/53, B01F 27/808, B01F 35/41, B01F 35/75, B01F 35/30

(54) **A SEAL STRUCTURE FOR A STIRRING TANK AND A PULP MACHINE**

(30) Priority: 17.07.2023 CN 202310877308
(71) Applicant: Highsun Technology Co., Ltd., Hangzhou, Zhejiang 310000 (CN)
(72) Inventor: Zhiping, Li, Hangzhou (CN); Shaoyong, Zheng, Hangzhou (CN); Huimin, Bian, Hangzhou (CN); Jiyu, Chen, Hangzhou (CN); Yesheng, Gong, Hangzhou (CN)
(74) Representative: Monteiro Alves, Inês

(57) **Abstract**

The present invention discloses a sealed structure (2) for a mixing tank (1), which relates to the field of pulping technology. The sealed structure comprises a main shaft (21) that penetrates through the bottom wall of the mixing tank and a sealing seat (22) that is fitted on the main shaft. The main shaft is installed with a power source at one end outside the mixing tank. The sealing seat has a first sealing surface (221) in contact with the bottom wall of the mixing tank and a second sealing surface (222) in contact with the main shaft. A sealing sleeve is provided inside the sealing seat and is fitted on the main shaft. The sealing sleeve has a third sealing surface (2231) that connects to the second sealing surface and extends along the axial direction of the main shaft. The sealing structure in the present invention achieves multiple seals on the main shaft through the first sealing surface, second sealing surface, and third sealing surface formed on the sealing seat and sealing sleeve. This guarantees that the slurry inside the mixing tank will not leak through the clearance at the main shaft. The present invention also provides a pulper comprising the mixing tank and the aforementioned sealing structure, where the sealing structure is the sealed structure for the mixing tank as described above.

## Description

### Technical Field

The present invention relates to the field of pulping technology, and more specifically, to a seal structure for a stirring tank and a pulp machine.

### Background Technology

Batteries are widely used in electronic devices such as mobile phones, laptops, electric bikes, electric cars, electric planes, electric ships, electric toy cars, electric toy boats, electric toy planes, and electric tools, among others. Batteries can include nickel-cadmium batteries, nickel-hydrogen batteries, lithium-ion batteries, and secondary alkaline zinc-manganese batteries, among others. A large amount of powder is required in the battery manufacturing process, and before powder coating, the powder needs to be mixed with a solvent to form a slurry. The production of slurry requires an even pulping process and various raw materials need to be added to a pulp machine for pulping.

In a pulp machine, the stability of the main shaft, which is the main driving part, is an important factor for ensuring sustainable and efficient production. In related art, in order to prevent leakage of slurry in the stirring tank and to reduce the difficulty of sealing, the main shaft is generally arranged at the top of the stirring tank. However, this results in a long main shaft length, which leads to poor stiffness, prone to resonance, easy eccentric damage of the machine during high-speed rotation, and difficult maintenance. Placing the main shaft on the top of the stirring tank also leads to an increase in the overall height and volume of the pulp machine.

There are also existing solutions that place the main shaft at the bottom of the stirring tank, such as the patent CN112090323A, which describes a pulp beater. However, its seal structure is simple, the sealing effect is not good, and the slurry is prone to leakage from the main shaft.

### Summary of the Invention

The present invention aims to solve one of the technical problems in the related art to some extent. To achieve this goal, the present invention provides a seal structure for a stirring tank, which has the advantages of good sealing effect and effective prevention of slurry leakage from the stirring tank.

To achieve the above objectives, the present invention adopts the following technical solution:
A seal structure for a stirring tank, comprising a main shaft passing through the bottom wall of the stirring tank and a sealing seat sleeved on the main shaft, wherein the main shaft is installed with a power source at one end outside the stirring tank, and the sealing seat has a first sealing surface in contact with the bottom wall of the stirring tank and a second sealing surface in contact with the main shaft; the sealing seat is internally provided with a sealing sleeve sleeved on the main shaft, and the sealing sleeve has a third sealing surface connected to the second sealing surface and extending axially along the main shaft.

In the present invention, the main shaft is set at the bottom of the stirring tank, which shortens the length of the main shaft, enhances the stiffness of the main shaft, and prolongs the lifespan of the main shaft. The main shaft at the bottom makes the overall structure of the pulp machine more compact and easier to maintain. The main shaft penetrates through the bottom wall of the stirring tank and the sealing seat is sleeved on the main shaft to prevent slurry leakage in the stirring tank. One end of the main shaft is located outside the stirring tank and is installed with a power source to rotate the main shaft, while the other end extends into the stirring tank to stir the slurry by rotation. The sealing seat is partially embedded in the bottom wall of the stirring tank to form a first sealing surface in contact with the bottom wall, and additionally, the sealing seat is sleeved on the main shaft to form a second sealing surface in contact with the main shaft. The first sealing surface and the second sealing surface cooperate to seal the gap between the main shaft and the bottom wall. The sealing seat is internally provided with a sealing sleeve sleeved on the main shaft, and the sealing sleeve tightly matches the main shaft to form a third sealing surface connected to the second sealing surface and extending radially along the main shaft. The third sealing surface further prevents slurry leakage along the axial direction of the main shaft. Specifically, the third sealing surface refers to the surface of the sealing sleeve in contact with the main shaft, i.e., the inner wall surface of the sealing sleeve. The seal structure in the present invention achieves multiple seals of the main shaft through the first sealing surface, the second sealing surface, and the third sealing surface formed on the sealing seat and the sealing sleeve, ensuring that the slurry in the stirring tank will not leak through the gap at the main shaft and improving the sealing effect.

Optionally, the sealing sleeve is provided with multi-stage sealing units arranged axially along the main shaft, and adjacent two-stage sealing units are successively fixed. The sealing sleeve consists of multi-stage sealing units. Of course, setting only one-stage sealing unit should also be included within the scope of the present patent. The multi-stage sealing units are arranged axially along the main shaft, and the number of stages of the sealing units is determined based on factors such as the difficulty of sealing and the length of the main shaft, and can be controlled manually to improve the sealing effect. When the sealing difficulty is small or the length of the main shaft is short, a smaller number of sealing units can be selected. It should be noted that the structure of each stage of the sealing unit does not need to be exactly the same, as long as they can provide sealing function. The adjacent two stage sealing units are fixedly connected, and as a preferred option, the adjacent two stage sealing units are fixedly connected at the ends by an annular member. Alternatively, the adjacent two stage sealing units may be an integral structure. Additionally, the adjacent two stage sealing units can also be fixed by welding or other methods.

Optionally, the sealing unit includes a first sealing groove set along the inner circumferential wall of the sealing sleeve and a second sealing groove set along the outer circumferential wall of the sealing sleeve. The first sealing groove is an annular groove opened on the inner wall of the sealing sleeve, and the second sealing groove is an annular groove opened on the outer wall of the sealing sleeve. The first sealing groove is used to seal the main shaft to prevent slurry from leaking along the main shaft. The second sealing groove is used to seal the sealing sleeve to prevent liquid exchange between the sealing sleeve and the sealing seat.

Optionally, both the first sealing groove and the second sealing groove are equipped with sealing rings. The sealing rings are filled in the first sealing groove and the second sealing groove, and the sealing rings of appropriate specifications are selected according to the size of the first sealing groove and the second sealing groove to achieve the sealing purpose.

Optionally, a cooling chamber for introducing cooling liquid is formed in the sealing seat, and the cooling chamber has interconnected inlet and outlet ports, with the outlet port located above the inlet port. A cooling chamber for introducing circulating cooling liquid is formed in the sealing seat, and inlet and outlet ports are respectively arranged on both sides of the cooling chamber for circulating cooling liquid, thereby achieving the purpose of cooling the main shaft and avoiding production stoppages due to overheating of the main shaft. Specifically, the inlet port is located below the outlet port, so that when the cooling liquid flows in the cooling chamber, it needs to overcome gravity, resulting in a slower flow rate and longer residence time in the cooling chamber, thereby improving the cooling effect.

Optionally, the pressure in the cooling chamber is greater than or equal to the pressure of the liquid at the bottom of the tank to form positive pressure. The pressure in the cooling chamber is set to be greater than or equal to the pressure of the liquid at the bottom of the tank to prevent the liquid in the tank from flowing downward and avoid leakage of the liquid in the tank. Preferably, the pressure in the cooling chamber is equal to the pressure of the liquid at the bottom of the tank, so that the cooling chamber maintains pressure balance with the liquid at the bottom of the tank and prevents the cooling liquid in the cooling chamber from entering the tank.

Optionally, the sealing seat includes tightly fitted upper and lower seat bodies. The sealing sleeve is placed inside the lower seat body, and the upper seat body is fitted on the main shaft. The upper seat body is also covered with a pressure cover fitted on the main shaft. The upper seat body is placed above the lower seat body to prevent slurry from flowing into the lower seat body. The upper surface of the pressure cover directly contacts the slurry in the tank, and the pressure cover covers the upper seat body to prevent the slurry in the tank from entering the upper seat body. The pressure cover and the upper seat body are both fitted on the main shaft. It should be noted that the contact surface of the pressure cover with the main shaft and the contact surface of the upper seat body with the main shaft are both part of the second sealing surface that prevents slurry leakage.

Optionally, the sealing seat is equipped with oil seals fitted on the main shaft at the ends of the sealing seat. An oil seal is a device or part used in a machine to prevent fluid from overflowing from the joint. Preferably, oil seals are provided at both ends of the sealing seat, with the upper oil seal used to prevent slurry in the tank from leaking along the main shaft, and the lower oil seal used to prevent slurry or cooling liquid that leaks along the main shaft from entering components connected to the main shaft. It should be noted that the contact surface of the upper oil seal with the main shaft is also part of the second sealing surface. That is, the contact surface of the pressure cover with the main shaft, the contact surface of the oil seal with the main shaft, and the contact surface of the upper seat body with the main shaft together form the second sealing surface.

Optionally, the main shaft is fixedly connected to paddle blades at one end inside the tank, and the paddle blades are located near the bottom of the tank. The paddle blades are used to disperse the slurry and prevent agglomeration of powdered raw materials. Since substances in the slurry will settle to the bottom of the tank due to gravity or density, the paddle blades are placed near the bottom of the tank.

In addition, the present invention also provides a pulp refiner, including a mixing tank and a sealing structure, wherein the sealing structure is the aforementioned mixing tank sealing structure. The advantageous effects and reasoning process of the pulp refiner provided by the present invention are similar to those of the mixing tank sealing structure described above, and will not be repeated here.
1. The sealing structure in the present invention achieves multiple sealing of the main shaft through the first sealing surface, the second sealing surface, and the third sealing surface formed on the sealing seat and the sealing sleeve, ensuring that the slurry in the mixing tank does not leak through the gap of the main shaft.
2. The multi-stage sealing unit is arranged along the axial direction of the main shaft, and the number of sealing units is determined based on factors such as the difficulty of sealing and the length of the main shaft. The number of sealing units can be controlled manually, improving the sealing effect.
3. A cooling chamber for introducing circulating cooling liquid is formed in the sealing seat, and the pressure in the cooling chamber is set to be greater than or equal to the pressure of the liquid at the bottom of the tank to prevent the liquid at the bottom of the tank from flowing downward.

These characteristics and advantages of the present invention will be further disclosed in detail in the following specific embodiments and accompanying drawings. The best embodiments or means of the present invention will be described with reference to the accompanying drawings, but they do not limit the technical solution of the present invention. In addition, these features, elements, and components appearing in each of the following and accompanying drawings are multiple, and are marked with different symbols or numbers for convenience of representation, but all represent the same or similar structures or functions.

### Figure Description:

The following description is further illustrated in conjunction with the accompanying drawings:
FIG. 1 is an assembly diagram of the stirring tank and sealing structure of the present invention;
FIG. 2 is a sectional view of FIG. 1;
FIG. 3 is an enlarged view of section A in FIG. 2;
FIG. 4 is an exploded view of the sealing seat in the present invention;
FIG. 5 is a sectional view of the sealing sleeve in the present invention;
FIG. 6 is another sectional view of FIG. 1 from a different angle;
FIG. 7 is an enlarged view of section B in FIG. 6;
FIG. 8 is a schematic diagram of the structure in FIG. 7 with the sealing member hidden;
FIG. 9 is an assembly diagram of the sealing member and the driving member in an embodiment of the present invention.

In the above figures:
1. Stirring tank; 11. Tank body; 111. Bottom wall; 1111. Discharge port; 1111a. Diversion section; 1111b. Extension section; 1112. Discharge passage; 1112a. First diversion surface; 1112b. Second diversion surface; 112. Side wall; 12. Sealing member; 121. Sealing ring; 122. Pressure plate; 13. Driving member; 131. Cylinder; 132. Slide rod; 14. Discharge pipe; 2. Sealing structure; 21. Main shaft; 211. Paddle; 22. Sealing seat; 221. First sealing surface; 222. Second sealing surface; 223. Sealing sleeve; 2231. Third sealing surface; 2232. Sealing unit; 2232a. First sealing groove; 2232b. Second sealing groove; 224. Cooling chamber; 2241. Inlet; 2242. Outlet; 225. Upper seat; 226. Lower seat; 227. Pressure cover; 228. Oil seal.

### Specific embodiments:

The specific embodiments of the present invention will be described in detail below. The exemplary embodiments are shown in the accompanying drawings, and the same or similar reference numbers are used throughout to denote the same or similar elements or elements having the same or similar functions. Based on the embodiments in the embodiments, it is for explaining the present invention and should not be understood as limiting the present invention.

The term "one embodiment" or "one example" or "exemplary embodiment" as used herein refers to at least one embodiment described in detail in the specification. The phrase "in one embodiment" appearing at various locations in the specification does not necessarily refer to the same embodiment.

### Embodiment:

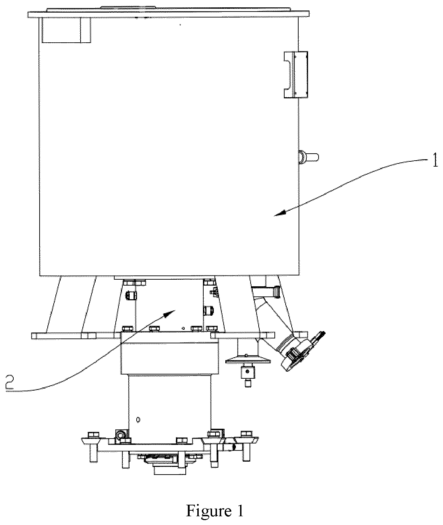

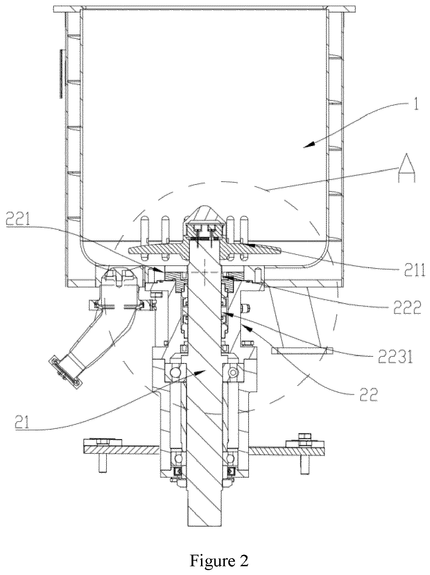

As shown in FIG. 1, the present embodiment provides a sealing structure for a stirring tank, which is located at the bottom of the stirring tank 1. As shown in FIG. 2, the sealing structure 2 comprises a main shaft 21 passing through the bottom wall of the stirring tank 1 and a sealing seat 22 sleeved on the main shaft 21. The main shaft 21 is arranged at the bottom of the stirring tank 1 to make the structure of the slurry mixer more compact and easier to maintain. One end of the main shaft 21 extends into the stirring tank 1 and is assembled with a paddle 211, and the other end is located outside the stirring tank 1 and is equipped with a power source for driving the main shaft 21 to rotate. Specifically, the paddle 211 is set near the bottom of the stirring tank 1. The paddle 211 is used to disperse the slurry and prevent agglomeration of the powdery material. Due to the fact that the material in the slurry will settle at the bottom of the stirring tank 1 due to gravity or density, the paddle 211 is set near the bottom of the stirring tank 1, and this design can also reduce the length of the main shaft 21 and increase the stiffness of the main shaft 21. Specifically, the power source is configured as a motor, and the main shaft 21 is connected to the output shaft of the motor.

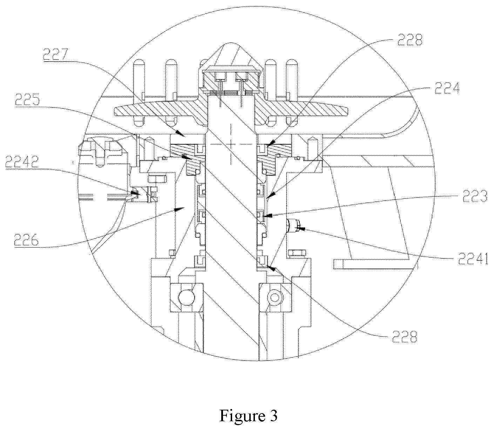

As shown in FIGS. 2 and 3, the sealing seat 22 is sleeved on the main shaft 21 to prevent the slurry in the stirring tank 1 from leaking. The sealing seat 22 is embedded in the bottom wall of the stirring tank 1 to form a first sealing surface 221 in contact with the bottom wall on both sides of the embedded part. In addition, the sealing seat 22 is sleeved on the main shaft 21 to form a second sealing surface 222 in contact with the main shaft 21. The first sealing surface 221 and the second sealing surface 222 cooperate to seal the gap between the main shaft 21 and the bottom wall. The sealing seat 22 is provided with a sealing sleeve 223 fitted on the main shaft 21. The sealing sleeve 223 closely matches the main shaft 21 to form a third sealing surface 2231 connected to the second sealing surface 222 and extending along the circumferential direction of the main shaft 21. The third sealing surface 2231 is used to further prevent the slurry from leaking along the axial direction of the main shaft 21. Specifically, the third sealing surface 2231 refers to the surface in contact with the main shaft 21, that is, the inner wall surface of the sealing sleeve 223, and the length of the third sealing surface 2231 is consistent with the length of the inner wall surface of the sealing sleeve 223. It should be noted that the shape of the sealing sleeve 223 can be changed according to the shape of the main shaft 21. When the main shaft 21 has a variable diameter section, the sealing sleeve 223 should also have a variable diameter section. In this embodiment, the sealing sleeve 223 is made of metal.

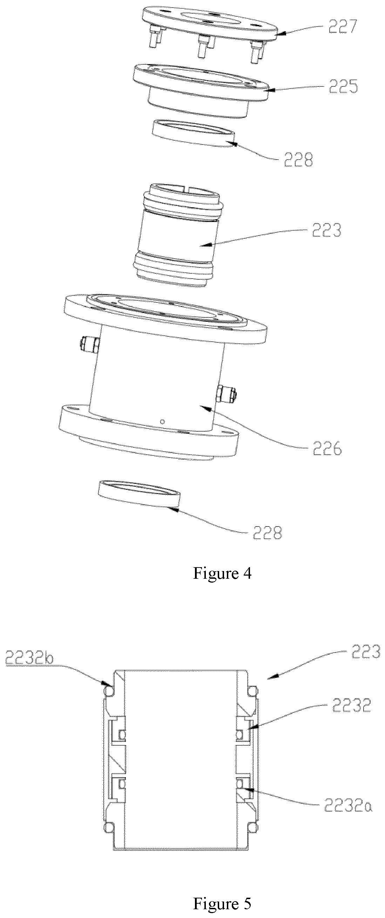

As shown in Figures 3 and 4, the sealing seat 22 includes tightly fitted upper seat body 225 and lower seat body 226. The sealing sleeve 223 is located inside the lower seat body 226, and the upper seat body 225 is tightly fitted onto the main shaft 21 to prevent slurry from flowing along the main shaft 21 towards the lower seat body 226. Above the upper seat body 225, there is a pressing cover 227 tightly fitted onto the main shaft 21, with its top surface covering the slurry, being flush with the inner wall surface of the bottom wall of the stirring tank 1. Specifically, both the upper seat body 225 and the lower seat body 226 have annular portions. The lower seat body 226 has a smaller diameter at the lower part than at the upper part, and the upper seat body 225 has a reserved opening with the same diameter as the lower part of the lower seat body 226, so that the upper seat body 225 is fitted into the lower seat body 226, and a sealing ring is arranged at the joining point of the upper seat body 225 and the lower seat body 226 for sealing. The joining point of the upper seat body 225 and the bottom wall of the stirring tank 1 is also equipped with a sealing ring for sealing. In addition, the cross-section of the lower seat body 226 is constructed in a cross shape and fixed at the bottom of the stirring tank 1. The pressing cover 227 is a cylindrical body with a cross-sectional diameter the same as the top surface diameter of the upper seat body 225. The pressing cover 227 is fixed onto the upper seat body 225 by bolts or other fasteners.

In this embodiment, both ends of the sealing seat 22 are equipped with oil seals 228, which tightly fit with the main shaft 21. The upper oil seal 228 is placed between the pressing cover 227 and the upper seat body 225 to prevent slurry from leaking to the main shaft 21. The lower oil seal 228 is placed at the bottom of the lower seat body 226 to prevent slurry from leaking along the main shaft 21 to the power source, thus avoiding damage. In other embodiments, it is also possible to only set the upper oil seal 228 on the upper end of the sealing seat 22 because, after multiple seals such as the sealing seat 22 and the sealing sleeve 223, the possibility of slurry leakage to the power source is small.

It should be noted that the contact surface between the portion of the upper seat body 225 embedded in the bottom wall of the stirring tank 1 and the contact surface between the pressing cover 227 and the bottom wall of the stirring tank 1 together form the first sealing surface 221, which is approximately a vertical plane in this embodiment.

The contact surface between the pressing cover 227 and the main shaft 21, the contact surface between the oil seal 228 and the main shaft 21, and the contact surface between the upper seat body 225 and the main shaft 21 together form the second sealing surface 222, which is approximately a vertical plane in this embodiment.

Inside the sealing seat 22, there is a cooling chamber 224 for circulating cooling liquid. The cooling chamber 224 is equipped with an inlet 2241 and an outlet 2242 on both sides to achieve the circulation of cooling liquid and cool the main shaft 21. This prevents the main shaft 21 from overheating and stopping production. Specifically, the inlet 2241 is located below the outlet 2242 so that the flow velocity of cooling liquid in the cooling chamber 224 is slowed down due to gravity, allowing the cooling liquid to stay in the cooling chamber 224 for a longer time, resulting in better cooling effect. Specifically, the sealing sleeve 223 is located inside the cooling chamber 224, and the volume of the cooling chamber 224 is slightly larger than the volume of the sealing sleeve 223. The side wall of the lower seat body 226 is provided with ingress and egress channels that communicate with the cooling chamber 224. Each channel is fitted with a connector to form the inlet 2241 and the outlet 2242, respectively.

The pressure in the cooling chamber 224 is set to be greater than or equal to the pressure of the liquid at the bottom of the stirring tank 1 to prevent the liquid in the stirring tank 1 from flowing downward and avoid leakage of liquid in the stirring tank 1. In this embodiment, the pressure in the cooling chamber 224 is equal to the pressure of the liquid at the bottom of the stirring tank 1, so the cooling chamber 224 and the liquid at the bottom of the stirring tank 1 are in pressure balance, which also prevents the cooling liquid in the cooling chamber 224 from entering the stirring tank 1.

As shown in Figures 3 and 5, the sealing sleeve 223 is equipped with multiple-stage sealing units 2232 arranged along the axis of the main shaft 21, and adjacent sealing units 2232 are fixedly connected in sequence. The sealing sleeve 223 is composed of multiple-stage sealing units 2232. Of course, even when only one-stage sealing unit 2232 is provided, it should also be included in the scope of protection of this patent. The number of stages of the multi-stage sealing unit 2232 along the axial direction of the main shaft 21 is determined based on factors such as the sealing difficulty and the length of the main shaft 21, and can be artificially controlled to improve the sealing effect. When the sealing difficulty is small or the length of the main shaft 21 is short, a smaller number of stages of sealing unit 2232 can be chosen. It should be noted that the structure of each stage of sealing unit 2232 does not need to be completely the same, as long as they can all play a sealing role. Adjacent sealing units 2232 can be fixedly connected or can be integrally formed; additionally, adjacent sealing units 2232 can also be fixed by welding or other methods.

In this embodiment, the sealing sleeve 223 is formed by securing two-stage sealing units 2232 with annular members at both ends. In other embodiments, the sealing sleeve 223 can also be formed by three or more stages of sealing units 2232. The sealing unit 2232 includes a first sealing groove 2232a provided along the circumferential direction of the inner wall of the sealing sleeve 223 and a second sealing groove 2232b provided along the circumferential direction of the outer wall of the sealing sleeve 223. Sealing rings are disposed in the first sealing groove 2232a and the second sealing groove 2232b, respectively, and suitable specification sealing rings are selected according to the dimensions of the first sealing groove 2232a and the second sealing groove 2232b to achieve the sealing purpose.

The first sealing groove 2232a is an annular groove provided on the inner wall of the sealing sleeve 223, and the second sealing groove 2232b is an annular groove provided on the outer wall of the sealing sleeve 223. For the upper sealing unit 2232, the second sealing groove 2232b is set in the part of the sealing sleeve 223 that is connected to the upper seat body 225; for the lower sealing unit 2232, the second sealing groove 2232b is set in the part of the sealing sleeve 223 that is connected to the lower seat body 226. The second sealing groove 2232b is provided with a sealing ring to prevent coolant from entering the sealing sleeve 223 and contaminating the slurry in the stirring tank 1 along the main shaft 21. The first sealing groove 2232a is provided on the inner wall surface of the sealing sleeve 223 that directly contacts the main shaft 21. Additionally, the number of the first sealing grooves 2232a can be two or three, depending on the sealing difficulty.

The main shaft 21 below the sealing seat 22 is equipped with ball bearings to reduce the rotational friction of the main shaft 21. In this embodiment, the rotation of the motor output shaft is transmitted to the main shaft 21 through the pulley.

In another embodiment, a slurry agitator is provided, comprising a stirring tank 1 and a sealing structure 2. The sealing structure 2, the main shaft 21, and the power source are all located at the bottom of the stirring tank 1, which facilitates the injection of slurry into the stirring tank 1 from above. The main shaft 21 is located at the bottom of the stirring tank 1, reducing the length of the main shaft 21, enhancing its rigidity, and extending its service life; moreover, the positioning of the main shaft 21 at the bottom makes the overall structure of the slurry agitator more compact and easier to maintain.

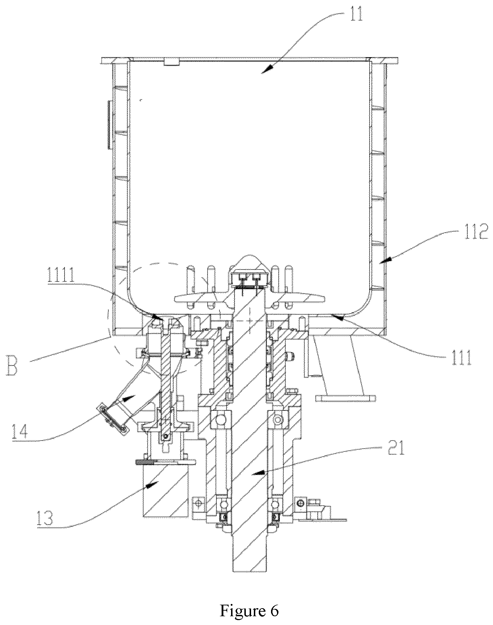

The stirring tank in this embodiment comprises a tank body 11 formed by enclosing a bottom wall 111 and a side wall 112, and a discharge port 1111 provided through the bottom wall 111. The discharge port 1111 has a hollow structure and defines a discharge passage 1112 symmetrically along the central axis of the discharge port 1111, through which the slurry flows. As shown in Figures 6, 7, and 9, the discharge port 1111 is provided with a sealing member 12, and a driving element 13 is positioned below the tank body 11 to raise and lower the driving sealing element 12 for opening and closing the discharge port 1111.

In this embodiment, the bottom wall 111 is constructed with both the inner and outer surfaces being horizontal planes, so that the discharge port 1111 does not need to be arranged in the middle of the bottom wall 111, facilitating the arrangement of the driving member 13 or sensors near the discharge port 1111. Additionally, the tank body 11 with a horizontal bottom surface has a larger volume than a tank body 11 with a curved bottom surface, that is, it can store more slurry. In other embodiments, the inner surface of the bottom wall 111 and the inner surface of the side wall 112 may be joined with an arc-shaped transition.

That is, there is an arc-shaped transition section between the inner surface of the bottom wall 111 and the inner surface of the side wall 112 to avoid the presence of hard-to-clean gaps at the junction, preventing dirt accumulation. In this embodiment, the bottom wall 111 and the side wall 112 can also be separately configured, with an arc-shaped section placed between the bottom wall 111 and the side wall 112 and welded to both sides of the arc-shaped section to the bottom wall 111 and the side wall 112, respectively. In other embodiments, the bottom wall 111 and the side wall 112 of the stirring tank 1 can also be integrally formed with a seamless structure.

The discharge port 1111 is set at the end of the bottom wall 111 close to the side wall 112, away from the middle position of the bottom wall 111, to avoid connecting the deformable hose due to limited space at the bottom of the stirring tank 1, reducing operation steps and saving costs. In this embodiment, the discharge port 1111 is only provided at one end of the bottom wall 111; in other embodiments, the discharge port 1111 can also be provided at both ends of the bottom wall 111 to improve discharge efficiency.

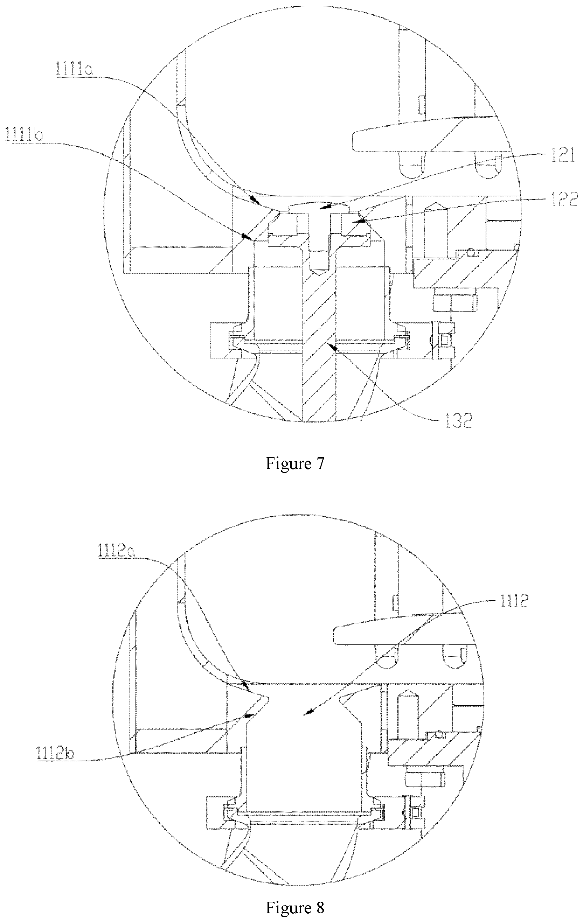

As shown in Figure 8, within the discharge channel 1112, there are formed a first guiding surface 1112a inclined towards the central axis of the discharge port 1111 and a second guiding surface 1112b inclined away from the central axis of the discharge port 1111. The first guiding surface 1112a is positioned above the second guiding surface 1112b and is used to guide the slurry to gather at the upper end of the discharge channel 1112, while the second guiding surface 1112b is used to guide the slurry to disperse at the lower end of the discharge channel 1112.

The discharge port 1111 includes a guiding section 1111a located on the inner side of the bottom wall 111 and an extending section 1111b located on the outer side of the bottom wall 111, and the guiding section 1111a and the extending section 1111b are connected through an opening. The first guiding surface 1112a is at least a part of the guiding section 11 1 1a, and the second guiding surface 1112b is at least a part of the extending section 1111b. In the preferred embodiment, the inner surface of the guiding section 1111a is defined as the first guiding surface 1112a, which is continuously decreasing in inner diameter towards the extending section 1111b. Specifically, the inner surface of the guiding section 1111a is configured as a frustum with a continuously decreasing inner diameter from top to bottom, and the slurry converges along the first guiding surface 1112a to the opening between the guiding section 1111a and the extending section 1111b.

As shown in Figure 8, in this embodiment, the inner surface of the extending section 1111b includes a vertical surface and a second guiding surface 1112b with a continuously decreasing inner diameter towards the guiding section 1111a. In other embodiments, the inner surface of the extending section 1111b may only include the second guiding surface 1112b with a continuously decreasing inner diameter. The second guiding surface 1112b is continuously decreasing in inner diameter towards the guiding section 1111a, i.e., the inner diameter of the second guiding surface 1112b increases from top to bottom, which increases the discharge capacity of the slurry and is advantageous for discharging.

Furthermore, the guiding section 1111a and the extending section 1111b are integrally formed on the bottom wall 111 through cutting, drilling, and other processes, which facilitates processing and reduces production costs.

The discharge port 1111 is connected with a discharge pipe 14 extending in a direction away from the bottom wall 111, and the central axis of the discharge pipe 14 intersects with the central axis of the stirring tank 1 at an inclined angle. The discharge pipe 14 is inclined relative to the stirring tank 1 and the end of the discharge pipe 14 extends out of the tank body 11 in the horizontal direction, making it easy to transfer the slurry to a container used in the next step without the need for an external hose and regardless of the size of the bottom space of the stirring tank 1, facilitating discharge. In the preferred embodiment, the discharge pipe 14 is removably joined to the bottom of the extending section 1111b. In this embodiment, the discharge pipe 14 is clamped to the bottom of the extending section 1111b, but in other embodiments, the discharge pipe 14 can also be fixed to the bottom of the extending section 1111b with a flange or other fixing components, making it easy to disassemble and repair. Of course, the structure in which the discharge pipe 14 is integrally set with the discharge port 1111 should also be encompassed within the scope of the present patent.

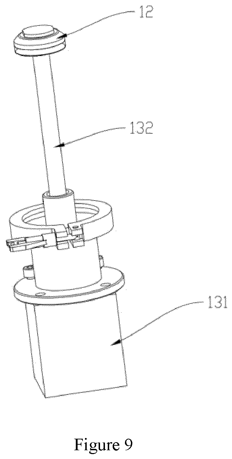

As shown in Figure 9, the driving component 13 includes a cylinder 131 and a sliding rod 132. The sliding rod 132 passes through the discharge pipe 14 and the discharge port 1111 and is fixed to the sealing member 12 to drive the sealing member 12 to move longitudinally. Specifically, the cylinder 131 is located at the bottom of the tank body 11 and is used to drive the sliding rod 132 to move up and down. The sliding rod 132 is connected to the sealing member 12, and when the sliding rod 132 moves up and down, the sealing member 12 also moves with the sliding rod 132. Users can achieve the automatic opening and closing of the discharge port 1111 by manipulating the cylinder 131, making the operation simple and fast.

As shown in Figure 7, the sealing member 12 includes a sealing ring 121 and a pressure plate 122 arranged on the top surface of the sealing ring 121. The pressure plate 122 is fixed to the end of the sliding rod 132 to compress the sealing ring 121. The sealing ring 121 is set in the extending section 1111b to seal the discharge channel 1112, thus achieving the opening and closing of the discharge port 1111. The pressure plate 122 and the sliding rod 132 cooperate to compress the sealing ring 121 so that the sealing ring 121 moves up and down with the sliding rod 132. The pressure plate 122 is T-shaped in longitudinal section, and the sealing ring 121 has a through hole; the lower part of the pressure plate 122 is inserted into the through hole of the sealing ring 121, and the upper part of the pressure plate 122 abuts against the top surface of the sealing ring 121.

The diameter of the sealing ring 121 is greater than the diameter of the opening between the extending section 1111b and the guiding section, and smaller than the diameter of the vertical surface of the extending section 1111b. When the sealing ring 121 moves up, it abuts against the second guiding surface inside the extending section 1111b due to the inability to pass through the opening, and the slurry flows out of the discharge port 1111 under the obstruction of the sealing ring 121 and the pressure plate 122. When the sealing ring 121 moves down, it no longer contacts or partially contacts the second guiding surface, allowing the slurry to be discharged through the discharge port 1111.

The above description is only a specific embodiment of the present invention, but the scope of the present invention is not limited thereto. Those skilled in the art will understand that the present invention includes, but is not limited to, the contents described in the accompanying drawings and the specific embodiments described above. Any modifications that do not depart from the functions and structural principles of the present invention are also within the scope of the claims of the present invention.

## Claims

1. A sealed structure for a mixing tank, comprising a main shaft penetrating through the bottom wall of the mixing tank and a sealing seat fitted on the main shaft. The main shaft is installed with a power source at one end outside the mixing tank. The sealing seat has a first sealing surface in contact with the bottom wall of the mixing tank and a second sealing surface in contact with the main shaft. The sealing seat is equipped with a sealing sleeve fitted on the main shaft, and the sealing sleeve has a third sealing surface that connects to the second sealing surface and extends along the axial direction of the main shaft.

2. The sealed structure according to claim 1, **characterized in that** the sealing sleeve is provided with multiple stages of sealing units arranged along the axial direction of the main shaft, and adjacent stages of the sealing units are fixedly connected.

3. The sealed structure according to claim 2, **characterized in that** the sealing unit comprises a first sealing groove arranged along the circumferential direction of the inner wall of the sealing sleeve and a second sealing groove arranged along the circumferential direction of the outer wall of the sealing sleeve.

4. The sealed structure according to claim 3, **characterized in that** both the first sealing groove and the second sealing groove are equipped with sealing rings.

5. The sealed structure according to claim 1, **characterized in that** a cooling chamber for introducing coolant is formed inside the sealing seat, and the cooling chamber has interconnected inlet and outlet ports, with the outlet port located above the inlet port.

6. The sealed structure according to claim 5, **characterized in that** the pressure of the cooling chamber is greater than or equal to the pressure of the liquid at the bottom of the mixing tank to form positive pressure.

7. The sealed structure according to any one of claims 1 to 6, **characterized in that** the sealing seat comprises tightly fitted upper and lower seats. The sealing sleeve is located inside the lower seat, and the upper seat is fitted on the main shaft. The upper seat is also covered with a pressure cover fitted on the main shaft.

8. The sealed structure according to any one of claims 1 to 6, **characterized in that** the end of the sealing seat is provided with an oil seal fitted on the main shaft.

9. The sealed structure according to any one of claims 1 to 6, **characterized in that** the main shaft is fixedly connected with paddles at one end inside the mixing tank, with the paddles arranged near the bottom of the mixing tank.

10. A pulper comprising a mixing tank and a sealing structure, wherein the sealing structure is any one of the mixing tank sealed structures according to any one of claims 1 to 9.
